Europäisches Patentamt

European Patent Office

Office européen des brevets

(11) Veröffentlichungsnummer: **0 496 079 A2**

# EUROPÄISCHE PATENTANMELDUNG

(21) Anmeldenummer: **91121525.9**

(22) Anmeldetag: **16.12.91**

(51) Int. Cl.5: **C09D 133/06**, C09D 133/14, //C08F6/22,(C09D133/06, 133:14)

(30) Priorität: **27.12.90 AT 2637/90**
**16.04.91 AT 790/91**

(43) Veröffentlichungstag der Anmeldung:
**29.07.92 Patentblatt 92/31**

(84) Benannte Vertragsstaaten:
**BE DE ES FR GB IT NL SE**

(71) Anmelder: **Vianova Kunstharz Aktiengesellschaft**

**A-8402 Werndorf(AT)**

(72) Erfinder: **Kriessmann, Ingo, Dr.**
**Hilmteichstrasse 75**
**A-8010 Graz(AT)**
Erfinder: **Wilfinger, Werner, Dr.**
**Händelstrasse 52**
**A-8042 Graz(AT)**
Erfinder: **Luttenberger, Johann**
**Haferfeldweg 14**
**A-8052 Graz(AT)**
Erfinder: **Dworak, Gert, Dr.**
**Dr. Robert Grafstrasse 25**
**A-8010 Graz(AT)**

(54) **Wasserverdünnbare Lackbindemittel auf der Basis von Acrylatcopolymerisaten.**

(57) Die Erfindung betrifft wasserverdünnbare Lackbindemittel auf der Basis von Acrylatcopolymerisaten, die durch eine partielle Kondensation einer Polycarboxylkomponente mit einer Polyhydroxylkomponente und nachfolgende, zumindest teilweise Neutralisation der Carboxylgruppen erhalten wurden.

Neben (Meth)acrylsäurealkylestern, die anteilig durch aromatische Vinylverbindungen ersetzt sein können, $\alpha$,$\beta$-ethylenisch ungesättigten Carbonsäuren und Monoestern der (Meth)acrylsäure mit Diolen weisen die Kondensationsprodukte 0,5 bis 2 Gew.-% Monomere mit zwei oder mehr reaktiven Doppelbindungen, wie z. B. Dioldi-(meth)acrylate oder Divinylbenzol, 0,5 bis 2 Gew.-% Polyolpolythioglykolsäureester und 0,5 bis 3,5 Gew.-% Fluor enthaltende Monomere auf.

Die Lackbindemittel eignen sich besonders zur Formulierung von hochwertigen hitzehärtbaren Decklacken mit einem niedrigen Gehalt an organischen Hilfslösemitteln.

Die Erfindung betrifft wasserverdünnbare Lackbindemittel auf der Basis von Acrylatcopolymerisaten, sowie das Verfahren zur Herstellung dieser Bindemittel und deren Verwendung zur Formulierung von wasserverdünnbaren Decklacken mit einem niedrigen Gehalt an organischen Hilfslösemitteln.

Wasserverdünnbare Bindemittel, die durch Mischung oder partielle Kondensation einer nach Neutralisation der Carboxylgruppen wasserlöslichen Polycarboxylkomponente mit einer harzartigen, im wesentlichen nicht wasserverdünnbaren Polyhydroxylkomponente erhalten werden, und die sich durch ein günstiges Viskositätsverhalten beim Verdünnen mit Wasser auszeichnen, werden in einer Reihe von Schutzrechten beansprucht, beispielsweise in den AT-PS 328 587, AT-PS 379 607, AT-PS 388 738 und AT-PS 388 382.

In der AT-PS 328 587 werden zwar Acrylatcopolymere als Kombinationspartner angegeben, doch sind auf Basis der dort beschriebenen üblichen Monomerenzusammensetzung keine in der Praxis brauchbaren Lacke formulierbar, da diese in ihren Applikationseigenschaften Nachteile aufweisen, wie die Tendenz zur Bläschenbildung und zum Abrinnen während des Einbrennvorgangs, selbst bei geringen Schichtstärken.

Es wurde nun gefunden, daß man durch eine selektive Auswahl der Monomerenzusammensetzung der Polycarboxylkomponente und der Polyhydroxylkomponente auch für den praktischen Einsatz geeignete Bindemittelsysteme auf Acrylatbasis erhält.

Die Erfindung betrifft demgemäß wasserverdünnbare Lackbindemittel auf der Basis von Acrylatcopolymerisaten, die durch eine partielle Kondensation einer Polycarboxylkomponente mit einer Polyhydroxylkomponente und nachfolgende, zumindest teilweise Neutralisation der Carboxylgruppen erhalten wurden, welche dadurch gekennzeichnet sind, daß als

Polycarboxylkomponente (A) 10 bis 40 Gew.-%, bezogen auf Feststoffgehalt, eines Acrylatcopolymerisats mit einer Säurezahl von 70 bis 240 mg KOH/g, vorzugsweise von 100 bis 200 mg KOH/g, welches

(Aa) 57 bis 90 Gew.-% (Meth)acrylsäurealkylester,welche einen Alkylrest mit 1 bis 12 C-Atomen aufweisen, wobei diese Ester in einem Anteil von bis zu 50 Gew.-% durch aromatische Vinylverbindungen, vorzugsweise Styrol, ersetzt sein können,

(Ab) 10 bis 33 Gew.-% $\alpha$,$\beta$-ethylenisch ungesättigte Carbonsäuren, vorzugsweise (Meth)acrylsäure, sowie

(Ac) bis zu 2 Gew.-% Monomere mit zwei oder mehr reaktiven Doppelbindungen,

(Ad) bis zu 2 Gew.-% mehrfunktionelle Kettenabbruchregler vom Typ der Polyolpolythioglykolsäureester und

(Ae) bis zu 8 Gew.-% Fluor aufweisende und mit (Aa) bis (Ad) copolymerisierbare Monomere

enthält, und als

Polyhydroxylkomponente (B) 90 bis 60 Gew.-%, bezogen auf Feststoffgehalt, eines Acrylatcopolymerisats mit einer Hydroxylzahl von 90 bis 250 mg KOH/g, vorzugsweise von 110 bis 180 mg KOH/g, und gegebenenfalls mit einer Säurezahl von 10 bis 30 mg KOH/g, welches

(Ba) 40 bis 80 Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen, vorzugsweise Styrol, ersetzt sein können,

(Bb) 20 bis 60 Gew.-% Monoester der (Meth)acrylsäure mit Diolen, welche einen Alkylenrest mit 2 bis 4 C-Atomen oder einen Oxyalkylenrest mit 6 bis 12 C-Atomen aufweisen, sowie

(Bc) bis zu 2 Gew.-% Monomere mit zwei oder mehr reaktiven Doppelbindungen,

(Bd) bis zu 2 Gew.-% mehrfunktionelle Kettenabbruchregler vom Typ der Polyolpolythioglykolsäureester,

(Be) bis zu 4 Gew.-% Fluor aufweisende und mit (Ba) bis (Bd) copolymerisierbare Monomere und gegebenenfalls

(Bf) 1 bis 5 Gew.-% $\alpha$,$\beta$-ethylenisch ungesättigte Carbonsäuren, vorzugsweise (Meth)acrylsäure,

enthält,

eingesetzt wurden, wobei mindestens eine der Komponenten (A) und (B) ein Monomer (Ac) bzw. (Bc) und/oder einen Regler (Ad) bzw. (Bd) und/oder ein Fluor aufweisendes Monomer (Ae) bzw. (Be) enthält und die Mengenverhältnisse für die Komponenten (A) und (B) so gewählt wurden, daß das Kondensationsprodukt

0,5 bis 2 Gew.-% Monomere (Ac) bzw. (Bc),

0,5 bis 2 Gew.-% Regler (Ad) bzw. (Bd)

und

0.5 bis 3,5 Gew.-% Fluor aufweisende Monomere (Ae) bzw. (Be)

enthält und eine Säurezahl von 30 bis 65 mg KOH/g, eine Hydroxylzahl von 70 bis 150 mg KOH/g, sowie eine Grenzviskositätszahl von 12 bis 18 ml/g, vorzugsweise von 13 bis 16 ml/g, gemessen in Chloroform/20°C. aufweist.

Die Erfindung betrifft weiters das Verfahren zur Herstellung dieser Bindemittel und deren Verwendung zur Formulierung von wasserverdünnbaren Decklacken mit einem niedrigen Gehalt an organischen Hilfslösemitteln.

Mit Hilfe der erfindungsgemäßen Bindemittel ist es möglich, Lacke zu formulieren, die in ihren anwendungstechnischen Eigenschaften, wie minimale Ablaufneigung, rasche Lösemittelabgabe und sehr guter Verlauf, sowie in der Gilbungsbeständigkeit und Wetterfestigkeit der eingebrannten Filme, den Anforderungen der Industrie, insbesonders der Automobilindustrie, sehr gut entsprechen.

Die Komponenten (A) und (B) werden in bekannter Weise durch Lösungspolymerisation hergestellt. Dabei werden die Monomere in den im Hauptanspruch angegebenen Menenverhältnissen eingesetzt.

Als Monomerenkomponente (Aa) bzw. (Ba) werden (Meth)acrylsäureester von Alkanolen mit 1 bis 12 C-Atomen, sowie gegebenenfalls anteilig, d. h. bis zu 50 Gew.-%. auch aromatische Vinylmonomere, insbesonders Styrol, verwendet.

Die Komponenten (Ab) bzw. (Bf) bestehen vorzugsweise aus Acryl- oder Methacrylsäure, doch können gegebenenfalls auch andere $\alpha,\beta$-ethylenisch ungesättigte Carbonsäuren, wie Maleinsäure, eingesetzt werden.

Als Komponente (Bb) werden Monoester der (Meth)acrylsäure mit Diolen, welche 2 bis 4 C-Atome aufweisen, wie Ethylenglykol, Propylenglykol und Butylenglykol bzw. die entsprechenden isomeren Verbindungen, eingesetzt. Weiters können auch Monoester von Ethergruppen enthaltenden Alkandiolen mit 6 bis 12 C-Atomen verwendet werden, beispielsweise Tri- oder entsprechende Polyethylenglykolmono(meth)-acrylsäureester bzw. Di- oder entsprechende Polypropylenmono(meth)acrylsäureester.

Die Komponenten (Ac) bzw. (Bc) bestehen aus mehrfunktionellen copolymerisierbaren Monomeren, wie Butandioldi(meth)acrylat, Hexandioldi(meth)acrylat, Trimethylolpropantri(meth)acrylat oder Divinylbenzol.

Als mehrfunktionelle Kettenabbruchregler (Ad) bzw. (Bd) werden Thioglykolsäureester, wie Pentaerythrittetrathioglykolsäureester oder Glycerintrithioglykolsäureester, verwendet.

Als Fluor enthaltende Monomere für die Komponenten (Ae) bzw. (Be) werden bevorzugt Perfluoroctylethylmethacrylat oder ähnliche Monomere eingesetzt.

Für die erfindungsgemäßen Bindemittel muß die Polycarboxylkomponente (A) eine Säurezahl von 70 bis 240 mg KOH/g, vorzugsweise von 100 bis 200 mg KOH/g, aufweisen. Die Hydroxylzahl der Polyhydroxylkomponente (B) liegt zwischen 90 bis 250 mg KOH/g, vorzugsweise zwischen 110 und 180 mg KOH/g, die Säurezahl gegebenenfalls zwischen 10 und 30 mg KOH/g.

Die Komponenten (A) und (B) werden in einem Verhältnis, bezogen auf Feststoffgehalt, zwischen 10:90 und 40:60 gemischt. Das Lösemittel der Polymerisate wird anschließend unter Vakuum weitgehend entfernt und soweit erforderlich, durch ein wassertolerantes, hochsiedendes Hilfslösemittel, wie Alkohole oder Glykolether, ersetzt. Die partielle Kondensation erfolgt bei 100 bis 150°C, vorzugsweise bei 110 bis 130°C, bis die Grenzviskositätszahl (gemessen in Chloroform/20°C) auf 12 bis 18 ml/g, vorzugsweise auf 13 bis 16 ml/g, angestiegen ist. Das Verhältnis der Grenzviskositätszahlen des Kondensationsproduktes zur Ausgangsmischung soll 1,1:1 bis 1,7:1, vorzugsweise 1,2:1 bis 1,5:1, betragen. Nach Erreichen der Endwerte wird ein geeignetes Neutralisationsmittel, wie Ammoniak, sekundäre und tertiäre Amine oder Alkanolamine, zugegeben und der Ansatz mit deionisiertem Wasser auf den gewünschten Festkörpergehalt verdünnt.

In einer speziellen Ausführungsform wird dem weitgehend wasserfreien, gegebenenfalls partiell oder vollständig neutralisierten Kondensationsprodukt aus den Komponenten (A) und (B) vor der Zugabe des gegebenenfalls noch erforderlichen Neutralisationsmittels und vor einer Verdünnung mit Wasser als Vernetzungskomponente (C) ein hydrophobes Aminoharz, vorzugsweise ein Melamin-Formaldehyd-Harz, in einem Anteil von 15 bis 35 Gew.-%, vorzugsweise von 20 bis 30 Gew.-%, bezogen auf den Feststoffgehalt des gesamten Bindemittels, bei maximal 85°C zugemischt und gründlich homogenisiert.

Durch diese Maßnahme können bei Lacken auf Basis derartiger Bindemittelkombinationen der Glanzgrad und die Wasserbeständigkeit der eingebrannten Lackfilme noch weiter verbessert werden.

Die Auswahl der als Komponente (C) erfindungsgemäß eingesetzten hydrophoben Aminoharze erfolgt durch einen einfachen Verdünnbarkeitstest. Es sind Melaminharze, Benzoguanaminharze und Harnstoffharze geeignet, die in einer Mischung aus 25 Gew.-Teilen des Harzes in der Lieferform, 15 Gew.-Teilen Ethylenglykolmonobutylether und 85 Gew.-Teilen Wasser bei Raumtemperatur spätestens 5 Minuten nach der Mischung eine stärkere Trübung oder Entmischung zeigen. Produkte dieser Art sind in großer Zahl im Handel erhältlich. Als brauchbar haben sich beispielsweise Melamin-Formaldehydkondensate, wie CYMEL® 1158/80, CYMEL ® 254/80 (beide AMERICAN CYANAMID CO), VIAMIN ® MF 514/60 (VIANOVA) oder MAPRENAL ® MF 915/75 (HOECHST), erwiesen.

Die Formulierung von wasserverdünnbaren Lacken unter Verwendung der erfindungsgemäßen Bindemittel und deren Applikation ist dem Fachmann bekannt und in der Literatur ausführlich beschrieben.

Die erfindungsgemäßen Bindemittel sind für ofentrocknende Decklacke, wie Automobildecklacke, Elektrogerätelacke und ähnliche Anwendungsgebiete geeignet. Vor allem können sie auch zur Formulierung von Klarlacken nach dem base-coat/clear-coat-Verfahren für die Autodecklackierung herangezogen werden. Von wesentlichem Vorteil ist die Möglichkeit, mit den erfindungsgemäßen Bindemitteln Lacke mit einem sehr niedrigen Gehalt an organischen Hilfslösemitteln zu formulieren.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Herstellung der in den Beispielen verwendeten Polycarboxylkomponenten (A) und Polyhydroxylkomponenten (B)

Die Copolymerisate wurden in bekannter Weise durch Lösungspolymerisation in Isopropanol entsprechend einem berechneten Festkörpergehalt von 50 Gew.-% für die Komponenten (A) bzw. 65 Gew.-% für die Komponenten (B) hergestellt. Mengenverhältnisse und Kennzahlen sind in der Tabelle 1 zusammengefaßt. Als Vergleichsbeispiele dienen ein Carboxylgruppen tragendes wasserverdünnbares Copolymerisat ($V_1$) und eine Kombination von Acrylatcopolymerisaten gemäß AT-PS 328 587 ($V_2$), deren Zusammensetzung ebenfalls in der Tabelle 1 beschrieben ist.

Beispiele 1 bis 10

Die Komponenten (A) und (B) werden in den in der Tabelle 2 angegebenen Mengenverhältnissen gemischt. Das Isopropanol wird unter Vakuum entfernt, bis der Festkörpergehalt des Ansatzes mindestens 95 Gew.-% beträgt. Nach Verdünnen des Ansatzes mit Dipropylenglykoldimethylether auf einen Festkörpergehalt von 85 bis 94 Gew.-%, wird bei 110 bis 120°C kondensiert. bis die gewünschte Grenzviskositätszahl erreicht ist. Nach dem Ende der Kondensationsreaktion wird auf 95°C gekühlt, mit Amin neutralisiert und mit deionisiertem Wasser gut dispergiert.

Beispiele 11 und 12

Die Herstellung erfolgt gemäß den Beispielen 1 bis 10, doch wird nach der Neutralisation mit dem Amin die Komponente (C) zugemischt, wobei der Ansatz mindestens 10 Minuten bei maximal 85°C homogenisiert und anschließend mit deionisiertem Wasser auf den gewünschten Feststoffgehalt eingestellt wird.

Die Kennzahlen für die Produkte gemäß den Beispielen und für die Vergleichsbeispiele finden sich ebenfalls in der Tabelle 2.

Tabelle 1

| | | KOMPONENTE (A) | | | | | VERGLEICH |
|---|---|---|---|---|---|---|---|
| | | 1 | 2 | 3 | 4 | 5 | 6 | ($V_2$) |
| (Aa) bzw. (Ab)) | Ethylacrylat | 12 | 18 | - | - | - | 19 | 20 |
| | Butylacrylat | 24 | - | 28 | 39 | 34 | - | 30 |
| | 2-Ethylhexylacrylat | - | 15 | 12 | - | - | 22 | - |
| | Methylmethacrylat | - | 30 | - | 18 | 27 | - | - |
| | Butylmethacrylat | 28 | 17 | - | - | - | - | - |
| | Styrol | 15,5 | - | 33,5 | 12 | - | 24,5 | 25 |
| (Ab) bzw. (Bf) | Acrylsäure | 10 | - | - | 25 | - | 30 | 25 |
| | Methacrylsäure | - | 16 | 24 | - | 30 | - | - |
| (Bb) | 2-Hydroxyethylacrylat | - | - | - | - | - | - | - |
| | 4-Hydroxybutylacrylat | - | - | - | - | - | - | - |
| | 2-Hydroxyethylmethacrylat | - | - | - | - | - | - | - |
| | Tripropyenglykolmethacrylat | - | - | - | - | - | - | - |
| (Ac) bzw. (Bc) | Butandioldiacrylat | - | 2 | - | - | - | - | - |
| | Hexandioldiacrylat | - | - | 1 | - | - | - | - |
| | Trimethylolpropantrimethacrylat | 0,5 | - | - | 1 | - | - | - |
| | Divinylbenzol | - | - | - | - | 2 | - | - |
| (Ad) bzw. (Bd) | PTTGS [1] | 2 | - | 1,5 | 1 | - | - | - |
| | GTTGS [2] | - | - | - | - | 1 | 0,5 | - |
| (Ae) bzw. (Be) | PFOEMA [3] | 8 | 2 | - | 4 | 6 | 4 | - |
| | Säurezahl mg KOH/g | 78 | 104 | 156 | 194 | 195 | 233 | 194 |
| | Hydroxylzahl mg KOH/g | - | - | - | - | - | - | - |
| | Grenzviskositätszahl ml/g (CHCl$_3$/20°C) | 10,1 | 8,9 | 9,5 | 11,1 | 11,1 | 10,5 | 10,0 |

PTTGS [1] = Pentaerythrittetrathioglykolsäureester   PFOEMA [3] = Perfluoroctylethylmethacrylat

GTTGS [2] = Glycerintrithioglykolsäureester

5

# Tabelle 1 Fortsetzung

| | | KOMPONENTE (B) | | | | | | | | | | | VERGLEICH | |
|---|---|---|---|---|---|---|---|---|---|---|---|---|---|---|
| | | 1 | 2 | 3 | 4 | 5 | 6 | 7 | 8 | 9 | 10 | 11 | (V$_1$) | (V$_2$) |
| (Aa) | Ethylacrylat | 22 | - | - | 12 | 29 | - | - | 13 | 15 | - | 15 | 4 | 10 |
| | Butylacrylat | 33 | - | 24 | 26 | - | 21 | - | - | 23 | - | 23 | 36 | 25 |
| | 2-Ethylhexylacrylat | - | 10 | 5 | - | 5 | - | 10 | - | 12 | 10 | 12 | - | 15 |
| | Methylmethacrylat | - | 19 | 15 | 14 | - | 25,5 | - | 32 | 24 | - | 22,5 | 25 | 22 |
| | Butylmethacrylat | - | 33,5 | - | - | 21 | - | 42 | - | - | 39,5 | - | - | - |
| | Styrol | 18 | - | 15 | - | - | - | - | - | - | - | - | - | - |
| (Ab) bzw. (Bf) | Acrylsaure | - | - | - | - | - | - | - | - | - | 2,5 | 1,5 | 5 | - |
| | Methacrylsaure | - | - | - | - | - | - | - | - | - | - | - | - | - |
| (Bb) | 2-Hydroxyethylacrylat | 24,5 | - | - | - | 33 | 8 | 38 | 51 | - | 38 | - | 25 | - |
| | 4-Hydroxybutylacrylat | - | 34 | - | - | - | 40 | 7 | - | 24 | 7 | 24 | - | - |
| | 2-Hydroxyethylmethacrylat | - | - | - | 37 | 31 | - | - | - | - | - | - | - | 28 |
| | Tripropyenglykolmethacrylat | - | - | - | 15 | 9 | - | - | - | - | - | - | - | - |
| (Ac) bzw. (Bc) | Butandioldiacrylat | - | 2 | - | - | - | - | 1 | - | - | 1 | - | - | - |
| | Hexandioldiacrylat | - | - | - | - | - | 1 | - | 1 | - | - | - | - | - |
| | Trimethylolpropantri-methacrylat | 0,5 | - | - | - | 2 | - | - | - | 1 | - | 1 | 1 | - |
| | Divinylbenzol | - | - | 1 | - | - | - | - | - | - | - | - | - | - |
| (Ad) bzw. (Bd) | PTTGS [1] | 2 | - | 1 | - | - | 0,5 | 2 | - | 1 | 2 | 1 | 1 | - |
| | GTTGS [2] | - | 1,5 | - | 2 | 1 | - | - | - | - | - | - | - | - |
| (Ae) bzw. (Be) | PFOEMA [3] | - | - | 2 | - | - | 4 | - | 3 | - | - | - | 1 | - |
| | Saurezahl mg KOH/g | - | - | - | - | - | - | - | - | - | 19 | 12 | 49 | - |
| | Hydroxylzahl mg KOH/g | 118 | 132 | 159 | 156 | 173 | 194 | 211 | 246 | 93 | 211 | 93 | 122 | 121 |
| | Grenzviskositatszahl ml/g (CHCl3/20°C) | 8,2 | 9,0 | 12,5 | 11,1 | 11,3 | 10,9 | 12,8 | 10,3 | 9,7 | 12,0 | 10,4 | 13,5 | 11,5 |

PTTGS [1] = Pentaerythrittetrathioglykolsaureester  PFOEMA [3] = Perfluoroctylethylmethacrylat

GTTGS [2] = Glycerintrithioglykolsaureester

6

Tabelle 2 (alle Mengenangaben beziehen sich auf Feststoffgehalt)

| Beispiel | 1 | 2 | 3 | 4 | 5 | 6 | 7 | 8 | 9 | 10 | 11 | 12 | $V_1$ | $V_2$ |
|---|---|---|---|---|---|---|---|---|---|---|---|---|---|---|
| Menge/Komponente A | 40 A1 | 40 A3 | 35 A2 | 35 A2 | 30 A5 | 25 A3 | 25 A3 | 25 A4 | 15 A6 | 25 A4 | 35 A2 | 25 A4 | – | 25 ($V_2$) |
| Menge/Komponente B | 60 B1 | 60 B8 | 65 B4 | 65 B7 | 70 B5 | 75 B3 | 75 B6 | 75 B1 | 85 B2 | 75 B9 | 65 B10 | 75 B11 | – | 75 ($V_2$) |
| Menge $V_1$ | | | | | | | | | | | | | 100 [3] | – |
| FK [1] | 97,8 | 95,7 | 98,9 | 97,6 | 96,0 | 98,2 | 97,6 | 98,5 | 95,3 | 97,4 | 97,6 | 97,4 | – | 95,2 |
| FK [2] | 89,5 | 89,0 | 93,5 | 90,0 | 91,0 | 89,0 | 91,0 | 90,0 | 91,5 | 90,5 | 90,0 | 90,5 | – | 88,0 |
| Kondensation, Stn/°C | 3/115 | 3/115 | 3/120 | 4/110 | 4/115 | 3/110 | 4/115 | 4/115 | 5/115 | 3/115 | 3/110 | 3/110 | – | 3/120 |
| $[\eta]$[4] der Mischung (M) | 9,2 | 10,4 | 10,8 | 11,5 | 11,0 | 12,1 | 10,6 | 8,7 | 9,5 | 10,0 | 12,0 | 10,4 | – | 10,6 |
| $[\eta]$[4] des Kond.Produkts (K) | 12,5 | 13,8 | 15,1 | 15,7 | 13,7 | 14,6 | 16,3 | 13,0 | 14,2 | 12,3 | 15,2 | 12,8 | 13,5 | 13,0 |
| $[\eta]$[4] (K) / $[\eta]$[4] (M) | 1,36 | 1,33 | 1,40 | 1,36 | 1,25 | 1,20 | 1,54 | 1,49 | 1,49 | 1,23 | 1,27 | 1,23 | – | 1,23 |
| Säurezahl mg KOH/g | 31 | 63 | 37 | 37 | 59 | 39 | 39 | 49 | 35 | 49 | 49 | 58 | 49 | 49 |
| Hydroxylzahl mg KOH/g | 71 | 148 | 101 | 13 | 121 | 120 | 146 | 89 | 112 | 70 | 137 | 70 | 122 | 90 |
| Neutralisationsmittel | TEA | DMA | DMA | DMA | DMA | DMA | TEA | DMA | DMA | DMA | DMA | DMA | DMA | DMA |
| Neutralisationsgrad (% der COOH-Gruppen) | 110 | 70 | 90 | 80 | 80 | 90 | 80 | 80 | 100 | 80 | 80 | 80 | 80 | 80 |

[1] Gew.-% Feststoffgehalt der Mischung nach der Entfernung des Isopropanols

[2] Gew.-% Feststoffgehalt der Mischung nach der Zugabe von Dipropylenglykoldimethylether

[3] = Anlösung: 70%ig in Ethylenglykolmonobutylether

[4] Grenzviskositätzahl ml/g (CHCl3/20°C)

TEA = Triethylamin

DMA = Dimethylethanolamin

EP 0 496 079 A2

Tabelle 2 Fortsetzung

| Beispiel | 1 | 2 | 3 | 4 | 5 | 6 | 7 | 8 | 9 | 10 | 11 | 12 | $V_1$ | $V_2$ |
|---|---|---|---|---|---|---|---|---|---|---|---|---|---|---|
| Menge/Komponente (C) | | | | | | | | | | | 33 C1 | 33 C2 | | |
| Verdünnung mit $H_2O$ auf Gew.-% Feststoffgehalt/ Lieferform | 38,5 | 40,2 | 41,2 | 40,6 | 40,2 | 44,6 | 39,7 | 38,0 | 36,2 | 39,2 | 40,6 | 40,4 | 28,2 | 40,1 |
| pH-Wert der 10%igen Lösung (20°C) | 9,1 | 7,2 | 7,8 | 7,7 | 7,3 | 7,9 | 7,7 | 7,5 | 8,3 | 7,4 | 7,9 | 8,4 | 8,8 | 7,9 |
| Zusammensetzung der Bindemittel | | | | | | | | | | | | | | |
| Anteil (Ac)+(Bc) Gew.-% | 0,5 | 1,0 | 0,7 | 1,35 | 2,0 | 1,0 | 1,0 | 0,63 | 1,70 | 1,0 | 1,1 | 1,0 | 1,0 | - |
| Anteil (Ad)+(Bd) Gew.-% | 2,0 | 0,6 | 1,3 | 1,3 | 1,0 | 1,13 | 0,75 | 1,75 | 1,35 | 1,0 | 1,3 | 1,0 | 1,0 | - |
| Anteil (Ae)+(Be) Gew.-% | 3,2 | 1,8 | 0,7 | 0,7 | 1,8 | 1,5 | 3,0 | 1,0 | 0,6 | 1,0 | 0,7 | 1,0 | 0,8 | - |
| Gew.-% organisches Lösemittel und Amin in Lieferform | 6,9 | 7,8 | 5,1 | 6,4 | 6,9 | 7,9 | 6,2 | 6,8 | 5,2 | 6,5 | 7,8 | 8,8 | 13,8 | 7,9 |

(C1) Handelsprodukt CYMEL ® 1158/80 (American Cyanamid Comp.)

(C2) Handelsprodukt MAPRENAL ® MF 915/75 (Hoechst AG)

Prüfung der Bindemittel gemäß den Beispielen 1 bis 12 bzw. den Vergleichsbeispielen $V_1$ und $V_2$

Die erfindungsgemäßen Bindemittel wurden als Klarlacke in einem Metalleffekt-base-coat-clear-coat-System und als Weißlacke geprüft.

Die Rezepturen sind in den Tabellen 3 und 4 zusammengefaßt, wobei sich das Verhältnis der Kombination von Acrylatcopolymerisaten bzw. des Acrylatcopolymerisats $V_1$ zu Melaminharz auf den jeweiligen Feststoffgehalt bezieht.

Die Indices 1) bis 10) in den Tabellen 3 und 4 bedeuten:

1) Handelsübliches Melaminharz, mittelreaktiv, 85%ig in Wasser (Cymel ® 373, Cyanamid)

2) Handelsübliches Silicon-Verlaufmittel für wasserverdünnbare Lacke (Additol ® XW 329, Hoechst)

3) Handelsübliche Lichtschutzmittelkombination Benztriazol-UV-Absorber (Tinuvin ® 1130, Ciba-Geigy) mit sterisch gehindertem Amin (Tinuvin ® 292, Ciba-Geigy) im Verhältnis 1:1

8

4) Handelsüblicher Entschäumer auf Basis von Acetylendiolen (Surfinol ® E 104/50 %, Air-Products)

5) Vollentsalztes Wasser

6) Feststoffgehalt in Gew.-%

7) Der HS-Wert ist eine Maßzahl für den Gehalt an flüchtigen organischen Lösemitteln und errechnet sich aus folgender Formel:

$$\text{HS-Wert} = \frac{\text{Gew.-\% Lack-Feststoffgehalt (LF) x 100}}{\text{Gew.-\% LF +Gew.-\% Hilfslösemittel+Gew.-\% Amin}}$$

8) Auslaufzeit nach DIN 53211/23°C in Sekunden

9) Gehalt an organischen Hilfslösemitteln und Amin in Gew.-%

10) Handelsübliches Titandioxid (Kronos ® CL 310, Kronos)

Die Lackansätze wurden mit Dimethylethanolamin auf einen pH-Wert von 7,5 bis 9,0 eingestellt und mit vollentsalztem Wasser auf eine Viskosität entsprechend einer Auslaufzeit nach DIN 53211/23°C von 27 bis 30 Sekunden verdünnt.

Die Applikation der Klarlacke erfolgte auf beschichtete Stahlbleche (Zinkphosphatierung, kathodisch abgeschiedener Elektrotauchlack (a), Füller (b), Metalleffekt-base-coat (c), wobei als (a) bis (c) in der Automobilindustrie eingesetzte Produkte verwendet wurden) durch Spritzen bei 23°C und 60 % rel. Luftfeuchtigkeit. Nach einer Ablüftzeit von 10 Minuten und einer Vortrockenzeit von 10 Minuten bei 80°C wurden die Lacke 30 Minuten bei 140°C eingebrannt.

Die Weißlacke wurden auf beschichtete Stahlbleche (Zinkphosphatierung, kathodisch abgeschiedener Elektrotauchlack (a), Füller (b), wobei als (a) und (b) in der Automobilindustrie eingesetzte Produkte verwendet wurden) in analoger Weise appliziert und eingebrannt.

Die Ergebnisse sind in den Tabellen 5 und 6 zusammengefaßt, die Indices (1) bis (4) bedeuten:

(1) gemessen mit einem Glanzmeßgerät der Marke Byk Type Colourgloss 2 bei einem Winkel von 60°

(2) Ein acetongetränkter Wattebausch wird auf den Lackfilm gelegt und die Zeit bis zur Erweichung des Films gemessen

(3) + : der Lackfilm ist nach einer Wasserlagerung bei 40°C nach 240 Stunden unverändert

(+): der Lackfilm ist nach einer Wasserlagerung bei 40°C nach 240 Stunden erweicht, er regeneriert sich jedoch nach ca. zwei Stunden Lagerung bei Raumtemperatur

(4) bei einem keilförmigen Lackauftrag (max. 60 µm, mind. 15 µm) wird ab der angegebenen Schichtstärke im eingebrannten Lackfilm eine Bläschenbildung bzw. ein Abrinnen festgestellt.

Alle Lackansätze auf Basis der erfindungsgemäßen Bindemittel zeigen nach einer Lagerung von 3 Monaten bei Raumtemperatur bei einer Wiederholung der Prüfungen der Filmeigenschaften praktisch keine Veränderung der Ergebnisse.

Tabelle 3

| Bindemittel aus Beispiel/ Lieferform | Klar-lack | 1 | 2 | 3 | 4 | 5 | 6 | 7 | 8 | 9 | 10 | 11 | 12 | $V_1$ | $V_2$ |
|---|---|---|---|---|---|---|---|---|---|---|---|---|---|---|---|
| 1 | | 73,5 | | | | | | | | | | | | | |
| 2 | | | 65,4 | | | | | | | | | | | | |
| 3 | | | | 79,0 | | | | | | | | | | | |
| 4 | | | | | 74,8 | | | | | | | | | | |
| 5 | | | | | | 70,6 | | | | | | | | | |
| 6 | | | | | | | 71,4 | | | | | | | | |
| 7 | | | | | | | | 64,5 | | | | | | | |
| 8 | | | | | | | | | 79,9 | | | | | | |
| 9 | | | | | | | | | | 79,9 | | | | | |
| 10 | | | | | | | | | | | 72,3 | | | | |
| 11 | | | | | | | | | | | | 98,2 | | | |
| 12 | | | | | | | | | | | | | 97,9 | | |
| $V_1$ | | | | | | | | | | | | | | 79,0 | |
| $V_2$ | | | | | | | | | | | | | | | 65,3 |
| Disperdrol: MF-Harz | | 75:25 | 70:30 | 75:25 | 70:30 | 70:30 | 70:30 | 70:30 | 75:25 | 70:30 | 75:25 | 75:25 | 75:25 | 70:30 | 70:30 |
| Melaminharz [1] | | 11,1 | 13,3 | 12,8 | 15,3 | 14,3 | 12,5 | 12,9 | 11,9 | 14,6 | 11,1 | -- | -- | 11,2 | 13,3 |
| Verlaufmittel [2] | | 0,2 | 0,2 | 0,3 | 0,3 | 0,2 | 0,3 | 0,2 | 0,2 | 0,2 | 0,2 | 0,2 | 0,2 | 0,2 | 0,2 |
| Lichtschutzmittel [3] | | 1,1 | 1,1 | 1,3 | 1,3 | 1,2 | 1,3 | 1,1 | 1,2 | 1,2 | 1,3 | 1,1 | 1,2 | 0,9 | 1,1 |
| Entschäumer [4] | | 0,5 | 0,5 | 0,6 | 0,6 | 0,6 | 0,6 | 0,5 | 0,6 | 0,6 | 0,6 | 0,5 | 0,6 | 0,4 | 0,5 |
| $H_2O$ [5] | | 13,6 | 19,5 | 6,0 | 7,7 | 13,1 | 13,9 | 20,8 | 6,2 | 3,5 | 14,5 | -- | -- | 8,3 | 19,6 |
| Summe | | 100 | 100 | 100 | 100 | 100 | 100 | 100 | 100 | 100 | 100 | 100 | 100 | 100 | 100 |
| berechneter FK [6] | | 39,3 | 39,1 | 45,3 | 45,2 | 42,2 | 43,8 | 38,1 | 42,1 | 43,0 | 39,6 | 41,4 | 41,2 | 32,9 | 39,0 |
| HS-Wert [7] | | 88,1 | 88,1 | 91,3 | 89,9 | 89,0 | 88,1 | 89,9 | 88,1 | 90,5 | 88,8 | 83,9 | 82,1 | 74,7 | 87,8 |
| pH-Wert (20°C) | | 8,8 | 7,9 | 8,1 | 8,0 | 8,0 | 7,8 | 7,7 | 7,7 | 8,1 | 7,7 | 8,8 | 8,7 | 8,0 | 8,0 |
| Viskosität [8] | | 30 | 28 | 30 | 28 | 28 | 28 | 31 | 28 | 30 | 29 | 28 | 30 | 28 | 29 |
| LM + A im Lack [9] | | 5,3 | 5,3 | 4,3 | 5,1 | 5,2 | 5,9 | 4,3 | 5,7 | 4,5 | 5,0 | 6,7 | 7,1 | 11,1 | 5,4 |

Tabelle 4

| Bindemittel aus Beispiel / Lieferform | Weiß-lack | 1 | 2 | 3 | 4 | 5 | 6 | 7 . | 8 | 9 | 10 | $V_1$ | $V_2$ |
|---|---|---|---|---|---|---|---|---|---|---|---|---|---|
| 1 | | 55,3 | | | | | | | | | | | |
| 2 | | | 49,3 | | | | | | | | | | |
| 3 | | | | 57,7 | | | | | | | | | |
| 4 | | | | | 54,6 | | | | | | | | |
| 5 | | | | | | 52,2 | | | | | | | |
| 6 | | | | | | | 49,9 | | | | | | |
| 7 | | | | | | | | 48,9 | | | | | |
| 8 | | | | | | | | | 59,2 | | | | |
| 9 | | | | | | | | | | 58,9 | | | |
| 10 | | | | | | | | | | | 55,0 | | |
| $V_1$ | | | | | | | | | | | | 55,4 | |
| $V_2$ | | | | | | | | | | | | | 53,7 |
| Disperdrol: MF-Harz | | 75:25 | 70:30 | 75:25 | 70:30 | 70:30 | 70:30 | 70:30 | 75:25 | 70:30 | 75:25 | 70:30 | 70:30 |
| Melaminharz [1] | | 8,4 | 10,0 | 9,3 | 11,2 | 10,6 | 11,2 | 9,8 | 8,8 | 10,7 | 10,9 | 7,8 | 8,4 |
| Titandioxid [10] | | 22,7 | 22,7 | 25,3 | 25,3 | 24,0 | 25,4 | 22,2 | 24,0 | 24,3 | 24,6 | 17,7 | 23,0 |
| Verlaufmittel [2] | | 0,1 | 0,1 | 0,2 | 0,2 | 0,1 | 0,2 | 0,1 | 0,1 | 0,2 | 0,2 | 0,1 | 0,1 |
| Entschäumer [4] | | 0,4 | 0,4 | 0,4 | 0,4 | 0,4 | 0,4 | 0,4 | 0,4 | 0,4 | 0,4 | 0,3 | 0,4 |
| $H_2O$ [5] | | 13,1 | 17,5 | 7,1 | 8,3 | 12,7 | 12,8 | 18,6 | 7,5 | 5,5 | 8,9 | 18,7 | 14,3 |
| Summe | | 100 | 100 | 100 | 100 | 100 | 100 | 100 | 100 | 100 | 100 | 100 | 100 |
| berechneter FK [6] | | 51,5 | 51,3 | 57,4 | 57,4 | 54,3 | 57,6 | 50,3 | 54,3 | 55,1 | 55,8 | 40,1 | 52,0 |
| HS-Wert [7] | | 92,8 | 92,7 | 94,8 | 93,9 | 93,4 | 93,3 | 94,0 | 92,8 | 94,4 | 93,6 | 83,7 | 92,1 |
| pH-Wert (20°C) | | 8,6 | 7,7 | 7,9 | 7,8 | 7,8 | 7,6 | 7,5 | 7,5 | 7,9 | 8,3 | 7,8 | 7,5 |
| Viskosität [8] | | 35 | 33 | 35 | 33 | 33 | 33 | 36 | 33 | 35 | 33 | 34 | 34 |
| LM + A im Lack [9] | | 4,0 | 4,1 | 3,2 | 3,7 | 3,8 | 4,1 | 3,2 | 4,2 | 3,3 | 3,8 | 7,8 | 4,5 |

EP 0 496 079 A2

Tabelle 5

| Klarlack | 1 | 2 | 3 | 4 | 5 | 6 | 7 | 8 | 9 | 10 | 11 | 12 | V₁ | V₂ |
|---|---|---|---|---|---|---|---|---|---|---|---|---|---|---|
| Pendelhärte DIN 53157 in Sek. | 180 | 150 | 150 | 143 | 150 | 142 | 160 | 142 | 120 | 135 | 175 | 170 | 140 | 155 |
| Gitterschnitt (DIN 53 151) | 1 | 0-1 | 0-1 | 0-1 | 1 | 0 | 1-2 | 0 | 0 | 1 | 0 | 0-1 | 1 | 1 |
| Glanz (1) | 85 | 82 | 90 | 85 | 87 | 82 | 89 | 82 | 84 | 83 | 90 | 90 | 76 | 71 |
| Acetonbeständigkeit in Min. (2) | 2 | 1 | 3 | 3 | 3 | 3 | 2 | 3 | 2 | 2 | 3 | 3 | 2 | 2 |
| Wasserbeständigkeit (3) | (+) | + | (+) | (+) | + | + | + | + | + | (+) | + | + | (+) | (+) |
| Tendenz zur Bläschen-bildung µm , (4) | 35 | 38 | 38 | 37 | 39 | 42 | 42 | 38 | 42 | 40 | 40 | 42 | 20 | 25 |
| Tendenz zum Abrinnen µm , (4) | 40 | 41 | 40 | 42 | 45 | 45 | 45 | 41 | 42 | 42 | 42 | 42 | 28 | 60 |

Tabelle 6

| Weißlack | 1 | 2 | 3 | 4 | 5 | 6 | 7 | 8 | 9 | 10 | V1 | V2 |
|---|---|---|---|---|---|---|---|---|---|---|---|---|
| Pendelhärte DIN 53157 in Sek. | 170 | 145 | 145 | 138 | 145 | 137 | 155 | 137 | 115 | 128 | 149 | 155 |
| Gitterschnitt (DIN 53 151) | 1-2 | 1 | 1 | 1 | 1-2 | 0-1 | 2 | 1 | 1-2 | 1-2 | 1-2 | 1 |
| Glanz (1) | 79 | 77 | 86 | 80 | 83 | 77 | 83 | 77 | 80 | 78 | 71 | 66 |
| Acetonbeständigkeit in Min. (2) | 2 | 1 | 3 | 3 | 3 | 3 | 2 | 3 | 2 | 2 | 2 | 2 |
| Wasserbeständigkeit (3) | (+) | + | (+) | (+) | + | + | + | + | + | (+) | (+) | (+) |
| Tendenz zur Bläschenbildung μm , (4) | 38 | 41 | 41 | 40 | 42 | 45 | 45 | 41 | 45 | 43 | 23 | 28 |
| Tendenz zum Abrinnen μm , (4) | 40 | 41 | 42 | 42 | 45 | 45 | 45 | 41 | 42 | 42 | 28 | 28 |

## Patentansprüche

1. Wasserverdünnbare Lackbindemittel auf der Basis von Acrylatcopolymerisaten, die durch eine partielle Kondensation einer Polycarboxylkomponente mit einer Polyhydroxylkomponente und nachfolgende zumindest teilweise Neutralisation der Carboxylgruppen erhalten wurden, dadurch gekennzeichnet, daß als

Polycarboxylkomponente (A) 10 bis 40 Gew.-%, bezogen auf Feststoffgehalt, eines Acrylatcopolymerisats mit einer Säurezahl von 70 bis 240 mg KOH/g, vorzugsweise von 100 bis 200 mg KOH/g, welches

(Aa) 57 bis 90 Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen, vorzugsweise Styrol, ersetzt sein können,

13

(Ab) 10 bis 33 Gew.-% $\alpha,\beta$-ethylenisch ungesättigte Carbonsäuren, vorzugsweise (Meth)-acrylsäure, sowie

(Ac) bis zu 2 Gew.-% Monomere mit zwei oder mehr reaktiven Doppelbindungen,

(Ad) bis zu 2 Gew.-% mehrfunktionelle Kettenabbruchregler vom Typ der Polyolpolythioglykolsäureester und

(Ae) bis zu 8 Gew.-% Fluor aufweisende und mit (Aa) bis (Ad) copolymerisierbare Monomere enthält, und als

Polyhydroxylkomponente (B) 90 bis 60 Gew.-%, bezogen auf Feststoffgehalt, eines Acrylatcopolymerisats mit einer Hydroxylzahl von 90 bis 250 mg KOH/g, vorzugsweise von 110 bis 180 mg KOH/g, und gegebenenfalls mit einer Säurezahl von 10 bis 30 mg KOH/g. welches

(Ba) 40 bis 80 Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen, vorzugsweise Styrol, ersetzt sein können,

(Bb) 20 bis 60 Gew.-% Monoester der (Meth)acrylsäure mit Diolen, welche einen Alkylenrest mit 2 bis 4 C-Atomen oder einen Oxyalkylenrest mit 6 bis 12 C-Atomen aufweisen, sowie

(Bc) bis zu 2 Gew.-% Monomere mit zwei oder mehr reaktiven Doppelbindungen,

(Bd) bis zu 2 Gew.-% mehrfunktionelle Kettenabbruchregler vom Typ der Polyolpolythioglykolsäureester,

(Be) bis zu 4 Gew.-% Fluor aufweisende und mit (Ba) bis (Bd) copolymerisierbare Monomere und gegebenenfalls

(Bf) 1 bis 5 Gew.-% $\alpha,\beta$-ethylenisch ungesättigte Carbonsäuren, vorzugsweise (Meth)-acrylsäure,

enthält,

eingesetzt wurden, wobei mindestens eine der Komponenten (A) und (B), ein Monomer (Ac) bzw. (Bc) und/oder einen Regler (Ad) bzw. (Bd) und/oder ein Fluor aufweisendes Monomer (Ae) bzw. (Bc) enthält und die Mengenverhältnisse für die Komponenten (A) und (B) so gewählt wurden, daß das Kondensationsprodukt

0,5 bis 2 Gew.-% Monomere (Ac) bzw. (Bc),
0.5 bis 2 Gew.-% Regler (Ad) bzw. (Bd)
und
0.5 bis 3,5 Gew-% Fluor aufweisende Monomere (Ae) bzw. (Be)
enthält und eine Säurezahl von 30 bis 65 mg KOH/g, eine Hydroxylzahl von 70 bis 150 mg KOH/g, sowie eine Grenzviskositätszahl von 12 bis 18 ml/g. vorzugsweise von 13 bis 16 ml/g. gemessen in Chloroform/20°C, aufweist.

**2.** Wasserverdünnbare Lackbindemittel, dadurch gekennzeichnet, daß das Kondensationsprodukt aus den Komponenten (A) und (B) gemäß Anspruch 1 als zugemischte Vernetzungskomponente (C) ein hydrophobes Aminoharz, vorzugsweise ein Melamin-Formaldehyd-Harz, in einem Anteil von 15 bis 35 Gew.-%, vorzugsweise von 20 bis 30 Gew.-%, bezogen auf den Feststoffgehalt des gesamten Bindemittels, enthält.

**3.** Verfahren zur Herstellung von wasserverdünnbaren Lackbindemitteln auf der Basis von Acrylatcopolymerisaten, die durch partielle Kondensation einer Polycarboxylkomponente mit einer Polyhydroxylkomponente und nachfolgende, zumindest teilweise Neutralisation der Carboxylgruppen erhalten werden, dadurch gekennzeichnet, daß man

(A) 10 bis 40 Gew.-%, bezogen auf Feststoffgehalt, eines Acrylatcopolymerisats als Polycarboxylkomponente (A) mit einer Säurezahl von 70 bis 240 mg KOH/g, vorzugsweise von 100 bis 200 mg KOH/g, welches in Form eines Lösungspolymerisats

(Aa) 57 bis 90 Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen, vorzugsweise Styrol, ersetzt sein können,

(Ab) 10 bis 33 Gew.-% $\alpha,\beta$-ethylenisch ungesättigte Carbonsäuren, vorzugsweise (Meth)-acrylsäure, sowie

(Ac) bis zu 2 Gew.-% Monomere mit zwei oder mehr reaktiven Doppelbindungen,

(Ad) bis zu 2 Gew.-% mehrfunktionelle Kettenabbruchregler vom Typ der Polyolpolythioglykolsäureester und

(Ae) bis zu 8 Gew.-% Fluor aufweisende und mit (Aa) bis (Ad) copolymerisierbare Monomere

enthält, mit

(B) 90 bis 60 Gew.-%, bezogen auf Feststoffgehalt, eines Acrylatcopolymerisats als Polycarboxylkomponente (B) mit einer Hydroxylzahl von 90 bis 250 mg KOH/g, vorzugsweise von 110 bis 180 mg KOH/g, und gegebenenfalls mit einer Säurezahl von 10 bis 30 mg KOH/g, welches in Form eines Lösungspolymerisats

(Ba) 40 bis 80 Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen, vorzugsweise Styrol, ersetzt sein können,

(Bb) 20 bis 60 Gew.-% Monoester der (Meth)acrylsäure mit Diolen, welche einen Alkylenrest mit 2 bis 4 C-Atomen oder einen Oxyalkylenrest mit 6 bis 12 C-Atomen aufweisen, sowie

(Bc) bis zu 2 Gew.-% Monomere mit zwei oder mehr reaktiven Doppelbindungen,

(Bd) bis zu 2 Gew.-% mehrfunktionelle Kettenabbruchregler vom Typ der Polyolpolythioglykolsäureester,

(Be) bis zu 4 Gew.-% Fluor aufweisende und mit (Ba) bis (Bd) copolymerisierbare Monomere und gegebenenfalls

(Bf) 1 bis 5 Gew.-% $\alpha,\beta$-ethylenisch ungesättigte Carbonsäuren, vorzugsweise (Meth)-acrylsäure,

enthält,

wobei mindestens eine der Komponenten (A) und (B) ein Monomer (Ac) bzw. (Bc) und/oder einen Regler (Ad) bzw. (Bd) und/oder ein Fluor aufweisendes Monomer (Ae) bzw. (Be) enthält und die Mengenverhältnisse für die Komponenten (A) und (B) so gewählt werden, daß das Kondensationsprodukt

0,5 bis 2 Gew.-% Monomere (Ac) bzw. (Bc),

0,5 bis 2 Gew.-% Regler (Ad) bzw. (Bd)

und

0,5 bis 3,5 Gew.-% Fluor aufweisende Monomere (Ae) bzw. (Be)

enthält,

mischt, unter Vakuum das Lösemittel entfernt, bis der Feststoffgehalt des Ansatzes mindestens 95 Gew.-% beträgt, den Ansatz mit einem wassertoleranten, hochsiedenden Hilfslösemittel auf einen Feststoffgehalt von 85 bis 94 Gew.-% verdünnt und anschließend die Mischung bei 100 bis 150°C, vorzugsweise bei 110 bis 130°C, partiell kondensiert, bis die Grenzviskositätszahl (gemessen in Chloroform/20°C) auf 12 bis 18 ml/g, vorzugsweise auf 13 bis 16 ml/g, angestiegen ist und die Säurezahl 30 bis 65 mg KOH/g bzw. die Hydroxylzahl 70 bis 150 mg KOH/g erreicht hat, mit Ammoniak und/der einem Amin und/oder Alkanolamin neutralisiert und gegebenenfalls mit deionisiertem Wasser verdünnt.

4. Verfahren nach Anspruch 3, dadurch gekennzeichnet, daß man als Komponente (Ac) bzw. (Bc) Butandioldi(meth)acrylat und/oder Hexandioldi(meth)acrylat und/oder Trimethylolpropantri(meth)acrylat und/oder Divinylbenzol einsetzt.

5. Verfahren nach Anspruch 3, dadurch gekennzeichnet, daß man als Komponente (Ae) bzw. (Be) Perfluoroctylethylmethacrylat einsetzt.

6. Verfahren nach Anspruch 3, dadurch gekennzeichnet, daß man als hochsiedendes und sekundäre Hydroxylgruppen aufweisendes Hilfslösemittel Dipropylenlglykolmonomethylether einsetzt.

7. Verfahren nach Anspruch 3, dadurch gekennzeichnet, daß das Verhältnis der Grenzviskositätszahlen (gemessen in Chloroform/20°C) des Kondensationsproduktes zur Ausgangsmischung 1,1:1 bis 1,7:1, vorzugsweise 1,2:1 bis 1,5:1 beträgt.

8. Verfahren zur Herstellung von wasserverdünnbaren Lackbindemitteln, dadurch gekennzeichnet, daß man dem weitgehend wasserfreien, gegebenenfalls partiell oder vollständig neutralisierten Kondensationsprodukt aus den Komponenten (A) und (B) vor der Zugabe des gegebenenfalls erforderlichen Neutralisationsmittels und vor einer Verdünnung mit Wasser als Vernetzungskomponente (C) ein hydrophobes Aminoharz, vorzugsweise ein Melamin-Formaldehyd-Harz, in einem Anteil von 15 bis 35 Gew.-%, vorzugsweise von 20 bis 30 Gew.-%, bezogen auf den Feststoffgehalt des gesamten Bindemittels, bei maximal 85°C zumischt und gründlich homogenisiert.

9. Verwendung der gemäß den Ansprüchen 3 bis 8 hergestellten Bindemittel zur Formulierung von wasserverdünnbaren Decklacken mit einem niedrigen Gehalt an organischen Hilfslösemitteln.